# EUROPEAN PATENT APPLICATION

(11) **EP 2 339 244 A2**
(43) Date of publication of application: **29.06.2011**
(21) Application number: 10008625.5
(22) Date of filing: 18.08.2010
(51) Int. Cl.: F24D 3/12, F24D 19/10

(54) **Floor heating controller, floor heating system, floor heating control method**

(30) Priority: 24.12.2009 JP 2009291918
(71) Applicant: IRSYSTEM.Co.,Ltd., Suita-shi Osaka 564-0063 (JP)
(72) Inventor: Ohtsuka, Keisuke, Suita-shi Osaka 564-0063 (JP)
(74) Representative: Strehl Schübel-Hopf & Partner

(57) **Abstract**

To provide a floor heating controller and others which can warm two floor heating zones efficiently with low electric capacity in floor heating system.

[MEANS TO SOLVE THE PROBLEM]

The floor heating controller 5 energizes to the heater 6 during first continuous energization time TPON after the floor heating system 1 starts to operate, and after first continuous energization, the floor heating controller 5 performs first pattern energization. In first pattern energization, energization to the heater 8 is turned on and energization to the heater 6 is turned off during heater 8-on-time TPPN2 at first and then energization to the heater 6 is turned on and energization to the heater 8 is turned off during heater 6-on-time TPPN1 and with this as one term of pattern energization, pattern energization is repeated predetermined repeat number of times TPCN.

## Description

### [TECHNICAL FIELD]

The present invention relates to a floor heating controller which performs electrical floor heating, specifically, a floor heating controller, a floor heating system, a floor heating control method and others which controls plural floor heating zones.

### [BACKGROUND ART]

Recent years, a floor heating system becomes widely used because of its comfort. It has been popular to lay floor heating heaters on plural rooms and warm the rooms respectively, or lay plural floor heating heaters on a room like living room and so on, to warm each zone.

In patent document 1, an example of a controller device of plural channels for floor heating which control plural electrical heaters for floor heating by one device is described.

### [PRIOR ART DOCUMENT]

### [PATENT DOCUMET]

[Patent document 1] Japanese patent application publication No.2009-186038

### [DISCROSURE OF THE INVENTION]

### [PROBLEM TO BE SOLVED BY THE INVENTION]

In a case of laying plural floor heating heaters, when floor heating heaters are each connected with different power sources (current carrying circuits) and plural heaters are energized at one time to rise temperature, necessary current increases.

Now, in perspectives of electricity saving, comfort and others, it is required to warm plural floor heating zones efficiently with low electricity supply. And in this time, it is desirable to save steps of operation and control easily.

This invention is made in consideration of the problem described above, and whose purpose is to provide a floor heating controller and others which can warm two floor heating zones efficiently with low electric capacity in a floor heating system.

### [MEANS TO SOLVE THE PROBLEM]

To achieve the purpose described above, the first invention is a floor heating controller which is used in a floor heating system including first heater and second heater and controls on/off of energization to the first heater and second heater comprising; a first continuous energization means which turns energization to first heater on and turns energization to second heater off during predetermined first continuous energization time after the floor heating system starts to operate, and a first pattern energization means which repeats pattern energization, that energization to the second heater is turned on and energization to the first heater is turned off during second heater energization time and energization to the first heater is turned on and energization to the second heater is turned off during first heater energization time, predetermined number of times after the first continuous energization time.

And it is desirable that ratio between the first heater energization time and the second heater energization time is about 1:3.

Additionally, it is desirable that the first continuous energization time is about 25∼30 minutes, sum of the first heater energization time and the second heater energization time is about 320 seconds, and repeat number of the pattern energization is about 6.

To achieve the purpose described above, the second invention is a floor heating system including first heater, second heater, and a floor heating controller which controls on/off of energization to the first heater and second heater in which; the floor heating controller comprises; a first continuous energization means which turns energization to first heater on and turns energization to second heater off during predetermined first continuous energization time after the floor heating system starts to operate, and a first pattern energization means which repeats pattern energization, that energization to the second heater is turned on and energization to the first heater is turned off during second heater energization time and energization to the first heater is turned on and energization to the second heater is turned off during first heater energization time, predetermined number of times after the first continuous energization time.

And it is desirable that ratio between the first heater energization time and the second heater energization time is about 1:3.

Additionally, it is desirable that the first continuous energization time is about 25∼30 minutes, sum of the first heater energization time and the second heater energization time is about 320 seconds, and repeat number of the pattern energization is about 6.

To achieve the purpose described above, the third invention is a floor heating control method, in a floor heating system including first heater and second heater, to control on/off of energization to the first heater and second heater, comprising; a first continuous energization step which energization to first heater is turned on and energization to second heater is turned off during predetermined first continuous energization time after the floor heating system starts to operate, and a first pattern energization step which pattern energization, that energization to the second heater is turned on and energization to the first heater is turned off during second heater energization time and energization to the first heater is turned on and energization to the second heater is turned off during first heater energization time, is repeated predetermined number of times after the first continuous energization time.

And it is desirable that ratio between the first heater energization time and the second heater energization time is about 1:3.

Additionally, it is desirable that the first continuous energization time is about 25∼30 minutes, sum of the first heater energization time and the second heater energization time is about 320 seconds, and repeat number of the pattern energization is about 6.

By the constitution described above, at first, one floor heating zone is warmed by first continuous energization, and then, another floor heating zone is warmed with preventing temperature fall in the one floor heating zone by first pattern energization. This helps to provide a floor heating controller and others which can warm two floor heating zones efficiently with low power supply. Additionally, when ratio between first energization time and second energization time is about 1:3, first continuous energization time is about 25∼30 minutes, sum of first heater energization time and second heater energization time is about 320 seconds, and repeat number of pattern energization is about 6, another floor heating zone can be warmed up to comfortable temperature with preventing temperature fall of one floor heating zone and keeping comfortable temperature. And configuration of energization time and others can be predetermined to apply this with start of heating, so this saves steps of operator's operation for configuration of adequate energization time.

### [EFFECT OF THE INVENTION]

According to the present invention, a floor heating controller and others which can warm two floor heating zones efficiently with low electric capacity in a floor heating system can be provided.

### [BRIEF DESCRIPTION OF THE DRAWINGS]

[Fig.1] The figure that shows outline of the floor heating system 1 related to this invention.
[Fig.2] The figure that shows an example of hardware constitution of the floor heating controller 5.
[Fig.3] The figure that shows an example of appearance of the floor heating controller 5.
[Fig.4] The figure that shows sequence of pattern control by the floor heating controller 5.
[Fig. 5] The graph that shows typical temperature change in the zone 7 and the zone 9 by pattern control of the floor heating controller 5.

### [DETAILED DESCRIPTION OF THE INVENTION]

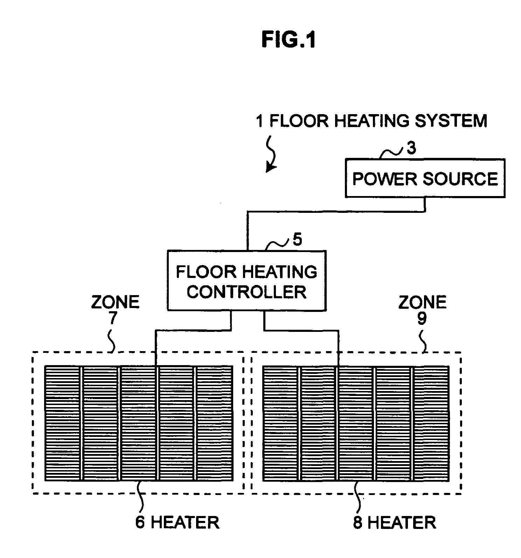

The embodiments of the floor heating system related to this invention will be explained below in detail based on figures. At first, referring to Figure 1, the floor heating system 1 related to this invention will be explained. Figure 1 shows outline of the floor heating system 1 related to this invention.

The floor heating system 1 includes the heater 6 (first heater) arranged at the zone 7 and the heater 8(second heater) arranged at the zone 9, which are laid on a floor of a room, and the floor heating controller 5.

The heater 6 and the heater 8 each have energization part for floor heating and heating elements like a conductive carbon producing heat by energization. The heater 6 and the heater 8 is laid on a heat shield material and others, and a wooden floor, a soft sheet, a tile, a stone material, a carpet, a thin straw mat, a cork and others are laid on them.

The floor heating controller 5 performs pattern control to control cyclic on/off of energization to the heater 6 and the heater 8 from the power source 3 according to predetermined pattern. In addition, the floor heating controller 5 can perform temperature control to control on/off of energization to the heater 6 and the heater 8 by constant comparison between temperature in the floor of the zone 7 and the zone 9 measured by temperature sensor and predetermined temperature. But when pattern control described above is performed, temperature sensor and others are not necessary.

Additionally, the power source 3 is a power source of 15A rating capacity corresponding to general sockets for family use in Japan, for example. And its current carrying circuit divided at the floor heating controller 5 or between the power source 3 and the floor heating controller 5 and connects the energization parts of the heater 6 and the heater 8 respectively, through output terminals of the floor heating controller 5 (not shown) corresponding to the heater 6 and the heater 8 respectively.

And actual arrangements of the zone 7 and the zone 9 are variable. The zone 7 and the zone 9 can be arranged in different rooms respectively, or the zone 7 and the zone 9 can be arranged in a row in same room, in addition, for example, the zone 9 can be arranged around the zone 7, and it is possible that the zone 7 and the zone 9 are composed of plural small zones and the small zones of the zone 7 and the small zones of the zone 9 are arranged each other. Also in these cases, the heater 6 and the heater 8 are arranged corresponding to each zone and operate with energization through the above current carrying circuit divided into two corresponding to the heater 6 and the heater 8.

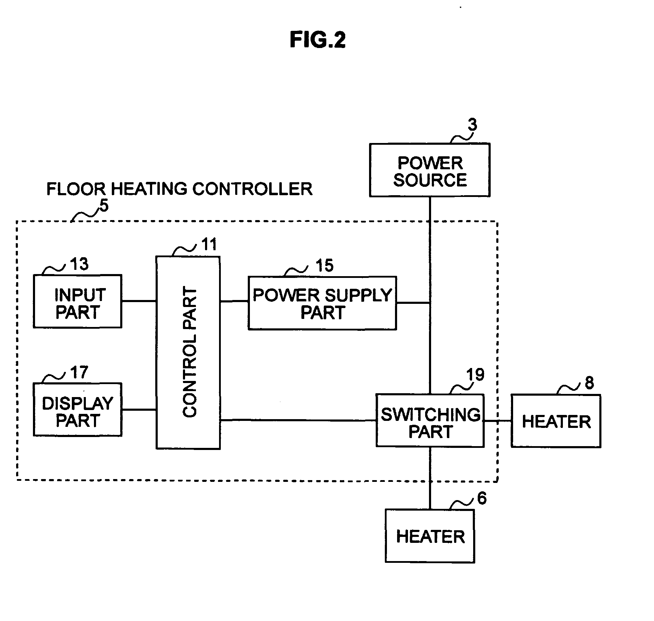

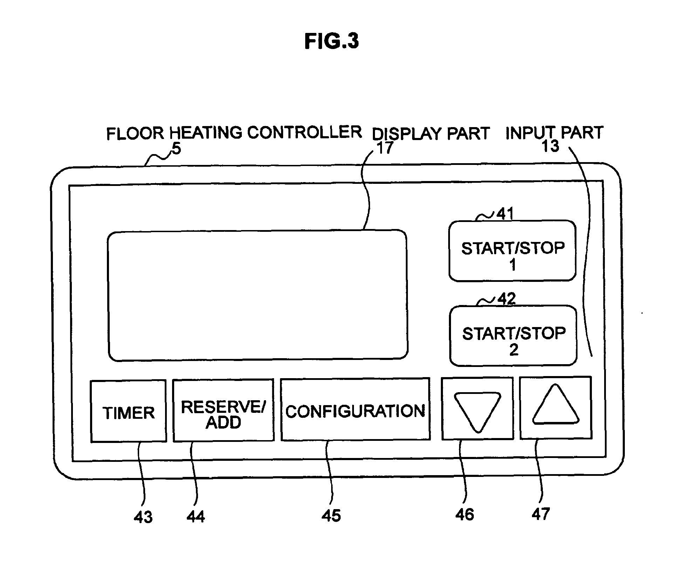

Then, referring to Fig.2 and Fig.3, the floor heating controller 5 will be explained.
Fig.2 shows an example of hardware constitution of the floor heating controller 5 and Fig.3 shows an example of appearance of the floor heating controller 5.

The floor heating controller 5 includes the control part 11, the input part 13, the power supply part 15, the display part 17, the switching part 19 and others.

The control part 11 consists of CPU (Central Processing Unit), ROM(Read Only Memory), RAM(Random Access Memory), memory device and others, and controls whole operation of the floor heating controller 5. In this embodiment, programs which predetermine energization time, on/off of energization to each heater and others for performing pattern control of first continuous energization and first pattern energization according to the sequence described below are memorized and thereby control is performed. Therefore, in control of first continuous energization and first pattern energization described below, it is not necessary for operator to determine energization time and others.

The input part 13 receives input and configuration by user. As shown in Fig.3, the input part 13 includes start/stop-1 button 41, start/stop-2 button 42, timer button 43, reserve/add button 44, configuration button 45, decrease button 46, increase button 47 and others.

Start/stop-1 button 41 is to start or stop operation of the heater 6. Start/stop-2 button 42 is to start or stop operation of the heater 8. Timer button 43 is to perform timer-controlled operation to operate the floor heating system 1 continuously only between configured periods and others. Reserve/add button 44 is to perform additional operation to operate continuously only between specified periods of the floor heating system 1, reserved operation to start continuous operation from stopped state of the floor heating system 1 at configured time, and others. Configuration button 45 is to configure temperature level of continuous operation, details of timer-controlled operation, additional operation, and reserved operation, and others. Decrease button 46 and increase button 47 are to configure increase and decrease of temperature level, and increase and decrease of time of timer-controlled operation, additional operation, reserved operation and others.

The power supply part 15 controls energization from the power source 3 to the floor heating controller 5 and ensures power source for operation.

The display part 17 is a LCD (Liquid Crystal Display) device as shown in Fig.3 and displays operation mode of the floor heating system 1, energization state, time, temperature, contents of error and others.

The switching part 19 includes relay and others, and performs on/off control of energization from the power supply 3 to the heater 6 of the zone 7 or the heater 8 of the zone 9 by instruction from the control part 11 according to the program of predetermined pattern control described below or operation of start/stop-1 button 41, start/stop-2 button 42 and others of the input part 13, or configuration of timer operation, additional operation, reserved operation and others.

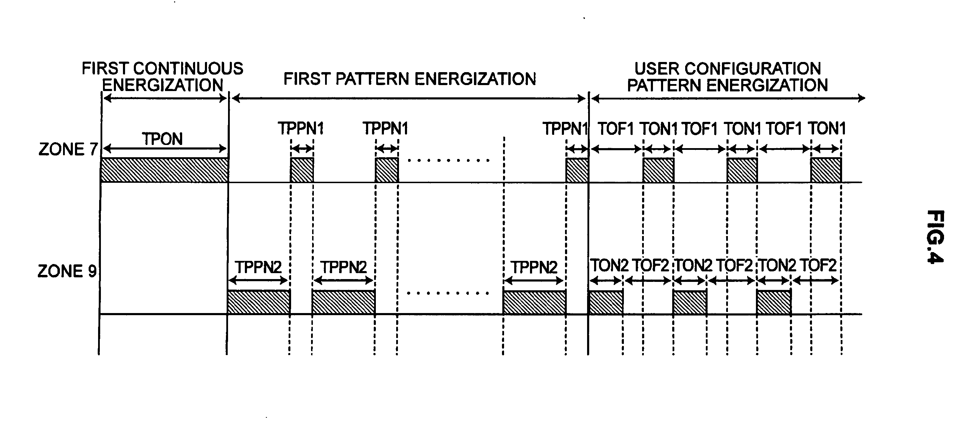

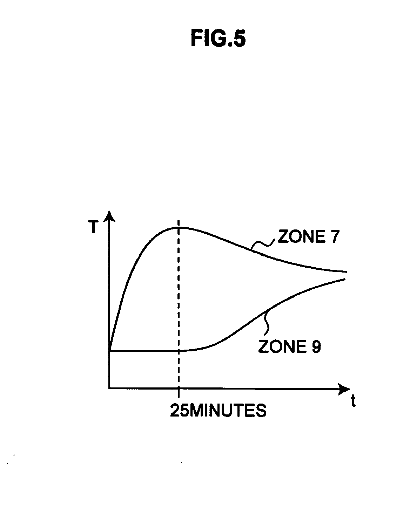

Then, referring to Fig.4 and Fig.5, the floor heating control method by the floor heating controller 5 will be explained. Fig.4 shows sequence of pattern control by the floor heating controller 5. Fig.5 shows a graph of typical temperature change of the zone 7 and the zone 9 by pattern control of the floor heating controller 5.

As shown in Fig.4, after starting to operate the floor heating system 1, the floor heating controller 5 performs first continuous energization and turn energization to the heater 6 in the zone 7 on during first continuous energization time TPON. First continuous energization time TPON is about 25∼30 minutes, for example, configured to 25 minutes. By first continuous energization, temperature in the zone 7 rises to configured target temperature or more in almost all cases.

After first continuous energization, the floor heating controller 5 performs first pattern energization. In first pattern energization, pattern energization, that energization to the heater 8 in the zone 9 is turned on and energization to the heater 6 in the zone 7 is turned off during heater 8-on-time TPPN2 (second heater energization time) at first and then energization to the heater 6 is turned on and energization to the heater 8 is turned off during heater 6-on- time TPPN1 (first heater energization time), is performed. With this as one term of pattern energization, pattern energization is repeated a number of times predetermined as first pattern repeat number TPCN. In addition, TPPN1 and TPPN2 are configured to be shorter than TPON.

For example, it is preferable that length of one term, TPPN2 and TPPN1 are 320, 240 and 80 seconds respectively and energization ratio of the heater 6 and the heater 8, which shows energization time a one term, are 25 % and 75% respectively (ratio between TPPN1 and TPPN2 is 1:3), or they are about these value respectively. And it is preferable that first pattern repeat number TPCN is 6 or about 6. Thereby, the zone 9 can be warmed up to comfortable temperature, with preventing temperature drop and keeping comfortable temperature in zone 7.

Above control is performed by the control part 11 according to the program that predetermines energization time and on/off of energization and others, regardless of user's configuration. Energization time and others noted above can be changed by changing the program.

Fig.5 is the graph that shows typical temperature changes of the floor of the zone 7 and the zone 9 when the control of first continuous energization and first pattern energization is performed with temperature in a room of 20°C, TPON of 25 minutes, TPPN2 of 240 seconds, TPPN1 of 80 seconds, one term of 320 seconds, TPCN of 6. Temperature of the zone 7 rises up to just about configured temperature by first continuous energization, and after that, temperature of the zone 9 rises up by first pattern energization. In first pattern energization, temperature of the zone 7 falls down moderately because of low energization ratio of 25% of the heater 6, but stops falling down nearly at some time, closing to equilibrium state of amount of heat discharge and heat supply for given periods. And because energization ratio of the heater 8 is as high as 75%, temperature of the zone 9 rises and after first pattern energization, temperature of the zone 7 and the zone 9 both are comfortable one with same level.

When energization ratio of the heater 6 is lower than 25%, temperature of the zone 7 is too low when first pattern energization finishes. On the contrary, when energization ratio of the heater 6 is higher than 25% and that of the heater 8 is lower than 75%, temperature of the zone 9 is not high enough and efficiency of a floor heating decreases.

After first pattern energization, user configuration pattern energization, or normal pattern energization configured by user starts. In this pattern energization, pattern control is performed with time of one term as the same and energization ratio of the heater 6 and the heater 8 configured by user within the range of 25∼65%. At the time TOF1 that energization to the heater 6 is turned off, energization to the heater 8 starts.

Here, sum of energization ratio of the heater 6 and the heater 8 is kept to be lower than 100%. For example, when energization ratio of the heater 8 is configured to 65%, energization ratio of the heater 6 is kept not to be (not to be able to configure) higher than 35%.

As explained above, according to the embodiment of this invention, in the floor heating system including two heaters, regardless of configuration by user, the floor heating controller automatically controls on/off of energization to each heater during given periods with appropriate sequence by performing first continuous energization and first pattern energization and warms two floor heating zones efficiently with low electric capacity. Additionally, in control of first continuous energization and first pattern energization, it is not necessary for operator to determine adequate energization time and others and steps of configuration by user are saved.

As described above, the embodiments of the present invention were explained referring to the attached figures, but the technical scope of this invention is not limited to the embodiments described above. It is obvious that the person having ordinary skill in the art is able to have ideas of various modified or adjusted examples within the scope of technical ideas described here, and it is naturally understood that those examples belong to the technical scope of this invention.

### [EXPLANATIONS OF REFERRENCE NUMERALS]

- 1: floor heating system
- 3: power source
- 5: floor heating controller
- 6, 8: heater
- 7, 9: zone
- 11: control part
- 13: input part
- 15: power supply part
- 17: display part
- 19: switching part

## Claims

1. A floor heating controller which is used in a floor heating system including first heater and second heater and controls on/off of energization to said first heater and second heater comprising;
a first continuous energization means which turns energization to first heater on and turns energization to second heater off during predetermined first continuous energization time after said floor heating system starts to operate,
and a first pattern energization means which repeats pattern energization, that energization to said second heater is turned on and energization to said first heater is turned off during second heater energization time and energization to said first heater is turned on and energization to said second heater is turned off during first heater energization time, predetermined number of times after said first continuous energization time.

2. The floor heating controller described in claim 1, wherein ratio between said first heater energization time and said second heater energization time is about 1:3.

3. The floor heating controller described in claim 1, wherein said first continuous energization time is about 25∼30 minutes, sum of said first heater energization time and said second heater energization time is about 320 seconds, and repeat number of said pattern energization is about 6.

4. A floor heating system including first heater, second heater, and a floor heating controller which controls on/off of energization to said first heater and second heater in which;
said floor heating controller comprises;
a first continuous energization means which turns energization to first heater on and turns energization to second heater off during predetermined first continuous energization time after said floor heating system starts to operate,
and a first pattern energization means which repeats pattern energization, that energization to said second heater is turned on and energization to said first heater is turned off during second heater energization time and energization to said first heater is turned on and energization to said second heater is turned off during first heater energization time, predetermined number of times after said first continuous energization time.

5. The floor heating system described in claim 4, wherein ratio between said first heater energization time and said second heater energization time is about 1:3.

6. The floor heating system described in claim 4, wherein said first continuous energization time is about 25∼30 minutes, sum of said first heater energization time and said second heater energization time is about 320 seconds, and repeat number of said pattern energization is about 6.

7. A floor heating control method, in a floor heating system including first heater and second heater, to control on/off of energization to said first heater and second heater, comprising;
a first continuous energization step which energization to first heater is turned on and energization to second heater is turned off during predetermined first continuous energization time after said floor heating system starts to operate,
and a first pattern energization step which pattern energization, that energization to said second heater is turned on and energization to said first heater is turned off during second heater energization time and energization to said first heater is turned on and energization to said second heater is turned off during first heater energization time, is repeated predetermined number of times after said first continuous energization time.

8. The floor heating control method described in claim 7, wherein ratio between said first heater energization time and said second heater energization time is about 1:3.

9. The floor heating control method described in claim 7, wherein said first continuous energization time is about 25∼30 minutes, sum of said first heater energization time and said second heater energization time is about 320 seconds, and repeat number of said pattern energization is about 6.
